# NEUE EUROPÄISCHE PATENTSCHRIFT

(11) **EP 2 417 048 B2**
(45) Veröffentlichungstag und Bekanntmachung des Hinweises auf die Entscheidung über den Einspruch: **21.12.2016**
(45) Hinweis auf die Patenterteilung: 30.04.2014
(21) Anmeldenummer: 10717507.7
(22) Anmeldetag: 06.04.2010
(51) Int. Cl.: B66B 21/00, B66B 21/06, B66B 21/10, B66B 23/00, B66B 23/02

(54) **EINRICHTUNG ZUM PERSONENTRANSPORT**
DEVICE FOR TRANSPORTING PERSONS
INSTALLATION POUR LE TRANSPORT DE PERSONNES

(30) Priorität: 09.04.2009 DE 102009017076
(43) Veröffentlichungstag der Anmeldung: 15.02.2012
(60) Teilanmeldung: 13005335.8
(73) Patentinhaber: Kone Corporation, 00330 Helsinki (FI)
(72) Erfinder: LANZKI, Winfried, 59423 Unna (DE); TAUTZ, Andreas, 45731 Waltrop (DE); ROLF, Carsten, 45549 Sprockhövel (DE); THIEL, Alfred, 97922 Lauda-Königshofen (DE); ZEIGER, Heinrich, 48157 Münster (DE)
(74) Vertreter: K & H Bonapat Patentanwälte Koch · von Behren & Partner mbB
(86) Internationale Anmeldenummer: PCT/DE2010/000392
(87) Internationale Veröffentlichungsnummer: WO 2010/115410

(56) Entgegenhaltungen:
- EP-A1- 0 138 372
- EP-A1- 1 174 382
- EP-A2- 1 108 674
- DE-A1- 2 314 120
- JP-A- 51 112 084
- JP-A- 2004 175 529
- JP-A- 2007 084 181
- US-A- 5 052 539
- US-A1- 2002 179 405

## Beschreibung

Die Erfindung betrifft eine Einrichtung zum Personentransport, insbesondere eine mit Stufen versehene Rolltreppe oder einen mit Paletten bestückten Rollsteig, wobei die Stufen bzw. Paletten zu einem durchgehenden Stufen- bzw. Palettenband verbunden und mittels Antriebselementen in Transportrichtung bewegbar sind.

Die DE 23 14 120 offenbart eine Rolltreppe mit einem Endlostrittstufenband und dessen jeweils zwei einander abgewandte Setzstufen bzw. Stoßflächen aufweisenden Trittstufen im tragenden Bandtrum mit etwa horizontalen Trittflächen über gegensinnig bzw. durch eine Rollsteigstrecke verbundene Neigungsstrecken führenden Laufbahnen, wobei die Laufbahnen des Trittstufenbandes in jeweils einer der Neigungsstrecken sowie gegebenenfalls der Rollsteigstrecke zugeordnete Bahnabschnitte unterteilt und die letzteren an, miteinander in den Bereichen der Abschnittsenden lösbar verbundenen Neigungsstrecken- sowie gegebenenfalls Rollsteigstreckengerüsten kontinuierlich ineinander übergehend angeordnet sind.

Der DE 20 2004 020 583 U1 ist eine modernisierte Rolltreppe oder ein modernisierter Rollsteig zu entnehmen, beinhaltend ein entkerntes Traggerüst, in welches in den Umlenk- und bedarfsweise auch in den Übergangsbereichen, Schablonen einbaubar und ausrichtbar sind, die an vorgebbaren Stellen Stützelemente als Ausrichtepunkte für neu zu installierende Komponenten aufweisen.

Die JP 04371485 A beschreibt eine Handlaufführungseinrichtung für eine Personenförderanlage.

Zwischen einem unteren Ein- bzw. Ausstiegsbereich und einem oberen Aus- bzw. Einstiegsbereich erstrecken sich unter einem vorgebbaren Winkel geneigt verlaufende Transportabschnitte, die über einen horizontal verlaufenden Transportabschnitt miteinander verbunden sind.

In der US 5,052,539 wird eine so genannte Bogenrolltreppe beschrieben, bei welcher zwei räumliche Kurvenabschnitte gegeben sind und die Stufen von dem einen in den anderen Bogenabschnitt geführt werden. Durch diese Ausgangsstellung müssen die Stufen speziell an die Kontur des Bogens angepasst werden. Gleiches gilt für die Stufenführungen.

Durch die EP 1 108 674 A2 ist eine gattungsgemäße Einrichtung zum Personentransport bekannt geworden, wobei die Stufen bzw. Paletten zu einem durchgehenden Stufen- bzw. Palettenband verbunden und mittels Antriebselementen in Transportrichtung bewegbar sind, wobei ein unterer Ein- oder Ausgangsabschnitt der Einrichtung mit einem oberen Aus- oder Eingangsabschnitt verbunden ist.

Schließlich offenbart die JP 2004-175529 A ein Auflager für einen Gerüstabschnitt einer Rolltreppe. Der obere und der untere Rahmenteil der Rolltreppe sind zwischen Geschossdecken eines Gebäudes vorgesehen. Zum Höhenausgleich befindet sich auf der geradlinig verlaufenden Transportstrecke der Rolltreppe ein Stützelement, auf welchem ein Auflager für den jeweiligen Gerüstabschnitt positioniert ist. Das Auflager ist hierbei höhenveränderbar vorgesehen, um baulichen Toleranzen der beabstandeten Geschossdecken begegnen zu können.

Der Erfindung liegt die Aufgabe zugrunde, einen alternativen Transportabschnitt für ein Personenbeförderungssystem bereitzustellen, das einen unteren. Ein- bzw. Ausstiegsbereich mit einem oberen Aus- bzw. Einstiegsbereich dergestalt miteinander verbindet, dass neben optischen und ästhetischen Eindrücken ein technisches Konzept bereitgestellt wird, das einfach im Aufbau ist, so dass auch bei Beschädigungen im Verlauf der Transportstrecke ein einfacher Austausch des jeweils beschädigten Bauteils herbeigeführt werden kann.

Im Rahmen dieser Aufgabe soll ein Auflager für nach Art eines räumlichen Kurvenbogens geführte Rolltreppen oder Rollsteige bereitgestellt werden, das unabhängig vom Neigungswinkel, respektive des Krümmungsverlaufes des Kurvenbogens, eine gezielte Ausrichtung und Verlegung der einzelnen Gerüstabschnitte der Rolltreppe bzw. des Rollsteiges gewährleistet.

Die Aufgabe wird erfindungsgemäß dadurch gelöst, dass ein unterer Ein- oder Ausgangsabschnitt der Einrichtung mit einem oberen Aus- oder Eingangsabschnitt über mindestens einen, gewölbt verlaufenden Transportabschnitt verbunden ist, der, über seine Länge und seine Höhe gesehen, durch ineinander übergehende unterschiedliche Radien gebildet ist, wobei zumindest der gewölbt verlaufende Transportabschnitt aus mehreren geradlinig ausgebildeten Gerüstabschnitten besteht, die im Bereich ihrer einander zugewandten Enden miteinander verbunden sind.

Vorteilhafte Weiterbildungen der erfindungsgemäßen Einrichtung sind den Unteransprüchen zu entnehmen.

Die Einrichtung wird darüber hinaus durch mehrere miteinander verbundene relativ zueinander verstellbare Konsolen weitergebildet, die mit Einstellmitteln in Wirkverbindung stehen und ein Auflager für Gerüstabschnitte der Personenförderanlage bilden.

Der jeweilige den Transportabschnitt bildende Kurvenbogen kann, über seine Länge gesehen, eine stetige Krümmung, beispielsweise einen Radius vorgebbarer Länge, aufweisen.

Alternativ besteht die Möglichkeit, dass der jeweilige den Transportabschnitt bildende Kurvenbogen, über seine Länge gesehen, aus ineinander übergehenden unterschiedlichen Radien gebildet ist. Hier bieten sich geometrische Konturen, wie Hyperbeln, Parabeln oder dergleichen, an.

Ebenfalls denkbar ist, dass der Transportabschnitt mehrere Kurvenbögen gleicher oder unterschiedlicher Krümmung aufweist, die bedarfsweise auch gegenläufig ausgebildet sein können. Somit können konvexe und konkave Bauweisen erzielt werden.

Von besonderem Vorteil, insbesondere auch im Hinblick auf den Austausch beschädigter Komponenten, ist, dass der gewölbt verlaufende jeweilige Transportabschnitt aus mehreren geradlinig ausgebildeten Gerüstabschnitten gebildet ist, die im Bereich ihrer einander zugewandten Enden miteinander verbunden sind.

Je nach zu überbrückendem Abstand zwischen dem Ein-/Ausgangsabschnitt bzw. Aus-/Eingangsabschnitt, respektive der zu überwindenden Höhe, besteht die Möglichkeit, den gewölbt oder stufenförmig verlaufenden Transportabschnitt freitragend auszubilden.

Sollte dies aus Distanz- und Höhengründen statische Probleme mit sich bringen, besteht ebenfalls die Möglichkeit, die Gerüstabschnitte auf einem gebäudeseitig vorgesehenen gewölbt ausgebildeten Unterbau abzustützen.

Wie bereits angesprochen, sind die einzelnen Gerüstabschnitte geradlinig ausgebildet, d.h. sie folgen der Form der Wölbung des Unterbaus nicht. Um hier eine problemlose Montage zu gewährleisten, wird vorgeschlagen, im Bereich eines jeden Gerüstabschnitts mindestens ein Auflager vorzusehen, über welches der jeweilige Gerüstabschnitt gegenüber dem Unterbau einstellbar positioniert werden kann.

Eine konkrete technische Ausgestaltungsform sieht hierbei vor, gerüstabschnittsseitig und gebäudeseitig zwei einander gegenüberliegende, relativ zueinander verstellbare Konsolen vorzusehen, die mit Einstellmitteln in Wirkverbindung stehen.

Einem weiteren Gedanken der Erfindung gemäß, wird im Bereich eines jeden Gerüstabschnitts ein Querträger zur Aufnahme mehrerer Auflager positioniert, der zumindest konsolenseitig mit abgerundeten Außenkanten versehen ist, wobei zumindest die verstellbare Konsole mit einem gerundeten Abschnitt versehen wird, der über abgerundeten Kanten des Querträgers führbar ist.

Das jeweilige Einstellmittel wird vorteilhafterweise durch eine Einstellschraube gebildet, die innerhalb einer in dem Querträger positionierten Gewindebuchse verstellbar ist.

Da sich, in Abhängigkeit von der zu überbrückenden Länge zwischen den Ein- und Ausgangsabschnitten, temperaturbedingte Längenänderungen der Gerüstabschnitte im gewölbt oder stufenförmig verlaufenden Transportabschnitt nicht ausschließen lassen, wird, einem weiteren Gedanken der Erfindung gemäß, vorgeschlagen, die Einstellschraube in ihrem, dem gebäudeseitigen Unterbau zugewandten Endbereich mit einem Gleitkörper zu versehen, der sich auf einer am gebäudeseitigen Unterbau vorgesehenen bedarfsweise metallischen Gleitfläche abstützt.

Vorteilhafterweise sind in mindestens einer der Konsolen Langlöcher vorgesehen, in welche Führungselemente der anderen Konsole einbringbar und nach entsprechender Einstellung und Ausrichtung des jeweiligen Gerüstabschnitts festlegbar sind.

Ein jeder, bedarfsweise mit einem Untersetzungsgetriebe zusammenwirkender Elektromotor ist leistungsmäßig für einen Transportabschnitt vorgebbarer Länge ausgelegt. Je nach Transportlänge der Personenförderanlage können beliebig viele Elektromotore zwischen den als Laschenketten ausgebildeten Transportmitteln eingebaut werden. Jeder Elektromotor wirkt mit einem Frequenzumformer zusammen, wobei definierte Messsignale des jeweiligen Frequenzumformers einer zentralen Steuerung zugeleitet werden.

Von besonderem Vorteil ist, dass die bedarfsweise mit Getrieben versehenen Elektromotore zwischen den Transportmitteln eingebaut sind. Dies reduziert die Gesamtlänge der Personenförderanlage. Einer der Elektromotore ist mit als Kettensternen ausgebildeten Umlenkelementen versehen, die die Transportmittel in einem der Endbereiche der Personenförderanlage umlenken. Im anderen Endbereich kann bedarfsweise ein weiterer Antrieb mit Umlenkelementen oder aber es können nur Kettensterne als Umlenkelemente vorgesehen werden. Der mindestens eine weitere Elektromotor, der im Bereich der Transportstrecke zwischen den Transportmitteln positioniert ist, wirkt mit Kettenrädern zusammen, deren Zähne an den Bolzen der Laschenketten anliegen und ausschließlich für die lineare Bewegung der Transportmittel sorgen.

Bei dem Steuerungssystem handelt es sich um ein geschlossenes, drehzahlgesteuertes Antriebssystem mit übergeordneter Steuerung. Die übergeordnete Steuerung bekommt die Informationen von den Antrieben über die dazugehörigen Frequenzumformer. Dazu ist an jedem Antrieb ein Impulsgeber angebracht.

Da es sich hier um ein geschlossenes, drehzahlgeregeltes System handelt, muss zunächst die Ausrichtung der einzelnen Antriebe zueinander ermittelt werden, damit die Antriebsräder (Kettensterne/Kettenräder) aller Antriebe ständig eine formschlüssige Verbindung zur Kette haben.

Die Stellung der Antriebe untereinander wird durch eine Referenzfahrt ermittelt. Dazu blockiert in Abwärtsfahrt der obere oder in Aufwärtsfahrt der untere Antrieb die Kette. Die anderen Antriebe werden über ein vorgegebenes Drehmoment bis zum Anschlag des Kettenrades in der Kette gefahren. Die somit ermittelte Stellung wird in der übergeordneten Steuerung gespeichert, wobei für den oberen (unteren) Antrieb ein manuell ermittelter Korrekturwert mit einbezogen wird. Dies ist notwendig, da die Kettenräder des oberen (unteren) Antriebs durch das Blockieren der Kette am falschen Anschlag der Kette stehen.

Für den weiteren Betrieb wird nun die abgespeicherte Ausrichtung der Antriebe zueinander als Referenz benutzt. Die übergeordnete Steuerung regelt das System so aus, dass die Drehzahlabweichung der Antriebe untereinander auf dem kleinstmöglichen Wert gehalten wird.

Der Erfindungsgegenstand ist anhand eines Ausführungsbeispiels in der Zeichnung dargestellt und wird wie folgt beschrieben. Es zeigen:
- Figur 1: Prinzipskizze der erfindungsgemäßen Einrichtung zum Personentransport;
- Figur 2: Teilansicht auf einige der Gerüstabschnitte samt Stützbereichen;
- Figuren 3 und 4: Darstellungen von einzelnen Gerüstabschnitten, die unter verschiedenen Neigungswinkeln abzustützen sind;
- Figur 5: Linienförmige Führungsformen von Transportabschnitten einer Rolltreppe;
- Figur 6: Linienförmige Führungsformen von Transportabschnitten eines Rollsteiges;
- Figur 7: Teildarstellung eines Antriebssystems;
- Figur 8: Prinzipskizze eines Steuerungsschemas für das Antriebssystem gemäß Figur 7.

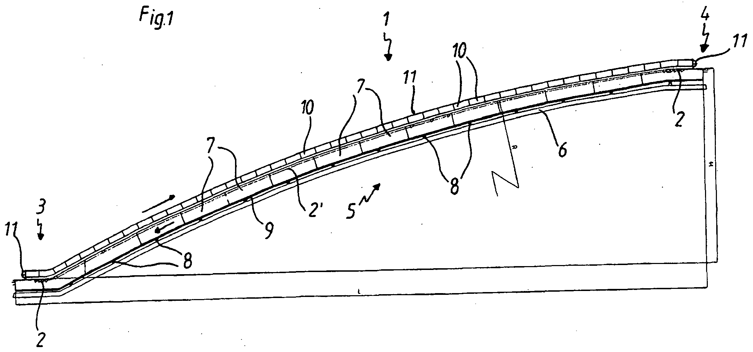

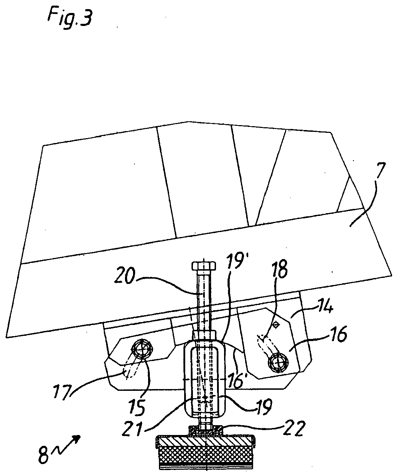

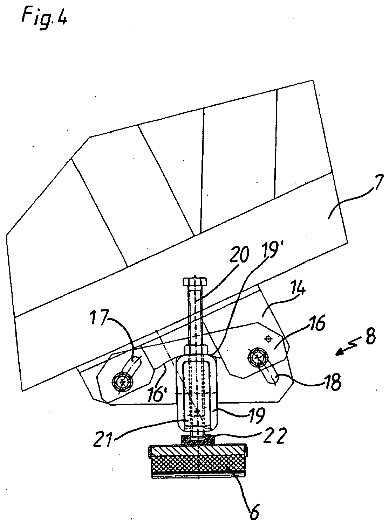

Figur 1 zeigt als Prinzipskizze eine in diesem Beispiel als Rolltreppe ausgebildete Einrichtung zum Personentransport 1. Selbige kann bedarfsweise auch ein Rollsteig sein, sofern die gesetzlich vorgeschriebenen Neigungswinkel eingehalten werden. Lediglich angedeutet ist ein, aus einer Vielzahl von Stufen 2 bestehendes Stufenband 2'. Die unterschiedlichen Transportrichtungen (aufwärts, abwärts) sind mit Pfeilen angedeutet. Im Bereich des Ein- 3 und/oder Ausgangsabschnittes 4 kann ein nicht dargestellter Antrieb für das Stufenband 2' positioniert sein. In diesem Beispiel soll der linke untere Teil der Figur 1 einen Eingangsabschnitt 3 und der rechte obere Teil der Figur 1 einen Ausgangsabschnitt 4 darstellen. Zwischen dem unteren Eingangsabschnitt 3 und dem oberen Ausgangsabschnitt 4 erstreckt sich ein Transportabschnitt 5, der als räumlicher Kurvenbogen ausgebildet ist. In diesem Beispiel soll ein Kurvenbogen gegeben sein, der einen vorgebbaren Radius R, beispielsweise 210 m, aufweist. In diesem Beispiel ist gebäudeseitig ein gewölbter Unterbau 6 vorgesehen, der den Transportabschnitt 5 aufnimmt. Wie bereits angesprochen kann der Transportabschnitt 5 unter bestimmten Voraussetzungen auch freitragend ausgebildet werden. Der Transportabschnitt 5 selber wird gebildet durch eine Mehrzahl geradlinig verlaufender Gerüstabschnitte 7. Ein jeder Gerüstabschnitt 7 verfügt über Auflager 8, über welche er einstellbar auf der Oberfläche 9 des Unterbaus 6 abgestützt werden kann. Dies wird insbesondere in den Figuren 3 und 4 noch näher erläutert.

Auf dem jeweiligen Gerüstabschnitt sind Balustradenelemente 10, beispielsweise in Form von Glasscheiben, aufgesetzt, auf denen ein Handlauf 11 in Transportrichtung bewegt wird. Im Eingangsabschnitt 3, respektive dem Ausgangsabschnitt 4, wird der Handlauf 11 analog zum Stufenband 2' in seiner Laufrichtung umgekehrt. Der Handlauf 11 kann bedarfsweise vom Stufenbandantrieb angetrieben werden oder wirkt mit einem eigenen Antriebsmittel zusammen. In diesem Beispiel soll der Höhenunterschied H zwischen dem Eingangsabschnitt 3 und dem Ausgangsabschnitt 4 ca. 21,4 m betragen, während die Gesamtlänge L der Rolltreppe 1 ca. 79 m beträgt.

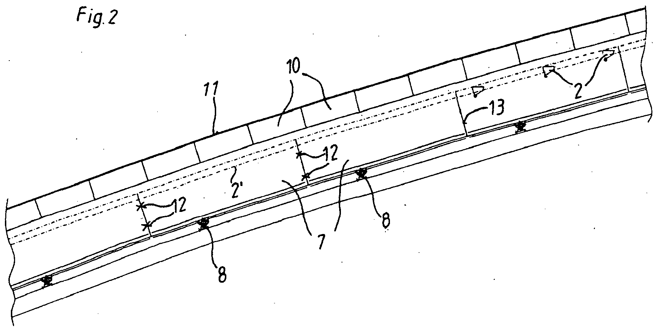

Figur 2 zeigt in vergrößerter Darstellung einige der in Figur 1 dargestellten Gerüstabschnitte 7 in Verbindung mit den Auflagern 8. Ebenfalls erkennbar ist das Stufenband 2' sowie einzelne Stufen 2. Ebenfalls erkennbar sind Balustradenelemente 10 sowie der Handlauf 11. Nur angedeutet ist, dass die einzelnen Gerüstabschnitte 7 über entsprechende Verbindungselemente 12 miteinander in Wirkverbindung gebracht werden.

Die Figuren 3 und 4 zeigen zwei gleichartig ausgebildete Auflager 8 in verschiedenen Ausrichtungspositionen. Erkennbar sind Teile eines Gerüstabschnitts 7, der nach Art eines Fachwerks aufgebaut ist. Unterhalb des jeweiligen Gerüstabschnitts 7 ist eine erste Konsole 14 befestigt, die ein zylindrisches Führungselement 15 aufweist, das in Richtung einer zweiten Konsole 16 weist und dort durch ein Langloch 17,18 hindurchführbar ist. Das jeweilige Langloch 17,18 ist auf einem Kreisbogen mit vorgebbarem Radius im Bereich der jeweiligen Konsole 14 bzw. 16 vorgesehen. Alternativ besteht die Möglichkeit, die Konsole 14 mit einem Durchgangsloch zu versehen und eine Schraube (nicht dargestellt) als Führungselement 15 zu verwenden. Angedeutet ist ein Querträger 19, der hochkant unterhalb des jeweiligen Gerüstabschnitts 7 hindurchgeführt und mit selbigem verbunden ist. Der Querträger 19 ist zumindest im gerüstseitigen Bereich mit abgerundeten Außenkanten 19' versehen. Zumindest eine der Konsolen 16 weist im Bereich der Außenkanten 19' einen gerundeten Abschnitt 16' auf, der über die Außenkanten 19' führbar ist. An vorgebbaren Stellen im Bereich des Querträgers 19 werden die Lagerstellen 8 positioniert. Der Querträger 19 nimmt im Bereich eines als Einstellschraube ausgebildeten Einstellelements 20 eine Gewindebuchse 21 auf, wobei die Einstellschraube 20 im Bereich ihres freien Endes mit einem Gleitkörper 22 zusammenwirkt. Lediglich angedeutet ist der Unterbau 6, auf welchem sich der Gleitkörper 22 abstützt.

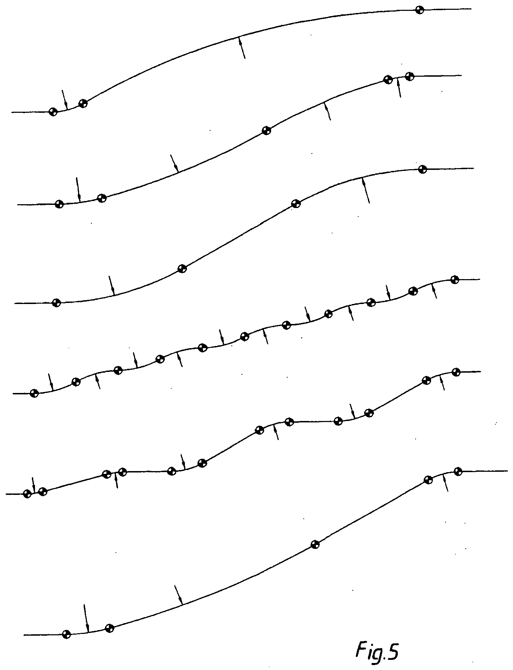

Figur 5 zeigt in Linienform einige technisch realisierbare Möglichkeiten Ein- bzw. Ausstiegsabschnitte einer Rolltreppe mit Transportabschnitten miteinander zu verbinden. Es kommen unterschiedliche konvex und konkav geformte Kurvenabschnitte zum Einsatz. Die unterschiedlichen Radien sind mit Pfeilen dargestellt. Wie bereits dargelegt, können die Radien unterschiedlich groß sein. Bedarfsweise können kurvenartige Transportabschnitte geradlinig verlaufender Transportabschnitte kombiniert werden.

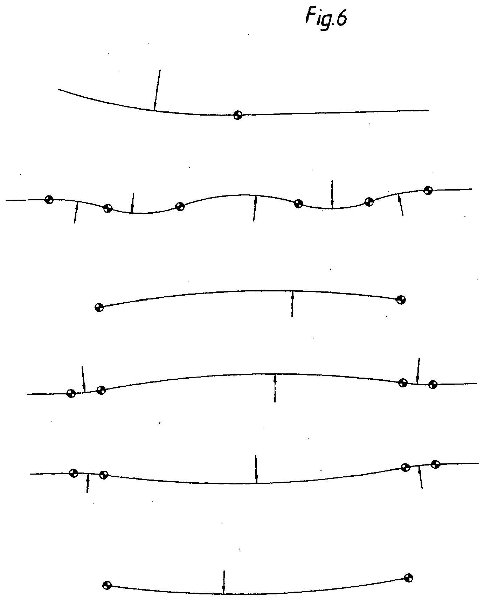

Figur 6 zeigt in Linienform einige technisch realisierbare Möglichkeiten Ein- bzw. Ausstiegsabschnitte eines Rollsteiges mit Transportabschnitten miteinander zu verbinden. Bei Rollsteigen muss darauf geachtet werden, dass die gesetzlich vorgeschriebenen Neigungswinkel eingehalten werden.

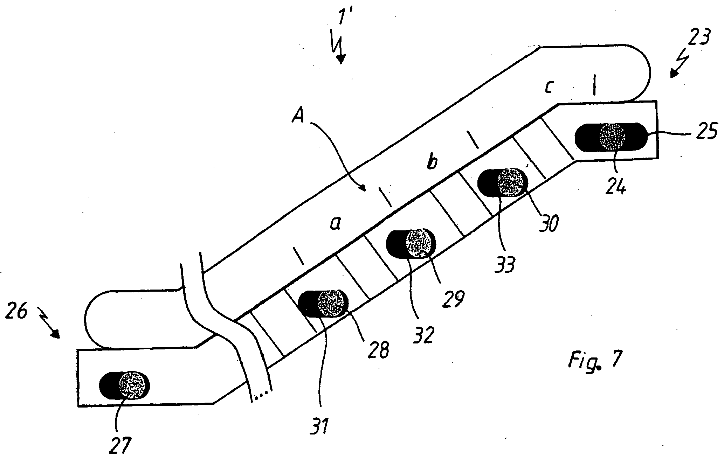

Figur 7 zeigt als Prinzipskizze eine herkömmliche Einrichtung zum Personentransport 1', in diesem Beispiel gebildet durch eine Rolltreppe. Sämtliche hier dargestellten Komponenten können auch auf eine Personenfördereinrichtung 1 gemäß Figur 1 übertragen werden. Im Beispiel gemäß Figur 1 ist im oberen Umlenkbereich 23 der Einrichtung 1' ein erster Elektromotor 24 samt angedeutetem Untersetzungsgetriebe 25 positioniert.

Im unteren Bereich 26 der Einrichtung 1' ist in diesem Beispiel ein zusätzlicher Handlaufantrieb 27 vorgesehen.

Die Einrichtung 1 kann zur Überwindung beliebig großer Transporthöhen und/oder Transportstrecken eingesetzt werden, indem im Bereich der Transportstrecke A mindestens ein weiterer Elektromotor 28,29,30 samt Untersetzungsgetrieben 31,32,33 zwischen den hier nicht dargestellten, Transportmittel bildenden Laschenketten positioniert wird. Diese Anordnung bildet eine extrem Platz sparende Bauweise. Hier nicht dargestellt ist, dass der im Bereich 23 vorgesehene Elektromotor 24, respektive das Untersetzungsgetriebe 25, mit zwei durch Kettensterne gebildeten Umlenkelementen zusammenwirkt, die die Laschenketten im Bereich 23 in ihrer Laufrichtung umlenken. Sämtliche Elektromotore 24,28,29,30 sind leistungsmäßig in etwa gleich ausgelegt, wobei ein jeder Elektromotor 24,28,39,30 für die Bewegung der Transportmittel über einen definierten Abschnitt a,b,c der Transportstrecke A dient.

Die Elektromotore 28 bis 30, respektive die Untersetzungsgetriebe 31 bis 33, wirken mit ebenfalls nicht dargestellten Kettenrädern zusammen, die im Eingriff mit den Laschenketten stehen und ausschließlich für die lineare Bewegung der Transportmittel zuständig sind.

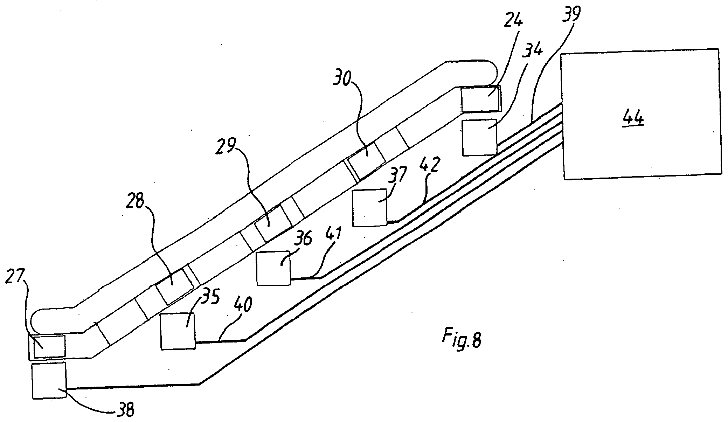

Figur 8 zeigt als Prinzipskizze ein Steuerungsschema für das in Figur 7 dargestellte Antriebssystem. Ein jeder Elektromotor 24,28,29,30 wirkt mit einem Frequenzumformer 34,35,36,37 zusammen. Auch der Handlaufantrieb 27 ist mit einem Frequenzumformer 38 ausgestattet. Über entsprechende Datenleitungen 39,40,41,42,43 stehen die Frequenzumformer 34 bis 38 mit einer übergeordneten Steuerung 44 in Wirkverbindung.

Bei dem Steuersystem, gebildet durch die übergeordnete Steuerung 44 sowie die Frequenzumformer 34 bis 37 handelt es sich um ein geschlossenes drehzahlgesteuertes Antriebssystem. Die übergeordnete Steuerung 44 bekommt die Informationen von den Antrieben 24,28 bis 30 über die zugehörigen Frequenzumformer 34 bis 37. Dazu ist an jedem Antrieb 24, 28 bis 30 ein nicht weiter dargestellter Impulsgeber angebracht. Zur Ermittlung eines Referenzmusters, durch welches die Stellung der Antriebe 24, 28 bis 30 untereinander ermittelt wird, wird zunächst einmal die Einrichtung 1' angefahren. Hierbei blockiert in Abwärtsfahrt der Antrieb 24 die nicht weiter dargestellten Ketten. Die anderen Antriebe 28 bis 30 werden über ein vorgegebenes Drehmoment bis zum Anschlag der zugehörigen Kettenräder in der Kette gefahren. Die somit ermittelte Stellung wird in der übergeordneten Steuerung 44 als Referenzmuster gespeichert. Für den weiteren Betrieb wird nun die abgespeicherte Ausrichtung der Antriebe 24, 28 bis 30 zueinander als Referenz benutzt. Die übergeordnete Steuerung 44 regelt das Antriebssystem so aus, dass die Drehzahlabweichungen der Antriebe 24, 28 bis 30 untereinander auf dem kleinstmöglichen Wert gehalten werden.

### Bezugszeichenliste

- 1: Einrichtung zum Personentransport
- 2: Stufen
- 2': Stufenband
- 3: Eingangsabschnitt
- 4: Ausgangsabschnitt
- 5: Transportabschnitt
- 6: Unterbau
- 7: Gerüstabschnitt
- 8: Auflager
- 9: Oberfläche
- 10: Balustradenelement
- 11: Handlauf
- 12: Verbindungselement
- 14: Konsole
- 15: Führungselement
- 16: Konsole
- 16': gerundeter Abschnitt
- 17: Langloch
- 18: Langloch
- 19: Querträger
- 19': gerundete Außenkante
- 20: Einstellelement
- 21: Gewindebuchse
- 22: Gleitkörper
- 23: oberer Umlenkbereich
- 24: Elektromotor
- 25: Untersetzungsgetriebe
- 26: unterer Umlenkbereich
- 27: Handlaufantrieb
- 28: Elektromotor
- 29: Elektromotor
- 30: Elektromotor
- 31: Untersetzungsgetriebe
- 32: Untersetzungsgetriebe
- 33: Untersetzungsgetriebe
- 34: Frequenzumformer
- 35: Frequenzumformer
- 36: Frequenzumformer
- 37: Frequenzumformer
- 38: Frequenzumformer
- 39: Datenleitung
- 40: Datenleitung
- 41: Datenleitung
- 42: Datenleitung
- 43: Datenleitung
- 44: Steuerung

- A: Transportstrecke
- a: Abschnitt
- b: Abschnitt
- c: Abschnitt
- H: Höhe
- L: Länge
- R: Radius

## Patentansprüche

1. Einrichtung zum Personentransport, insbesondere eine mit Stufen (2) versehene Rolltreppe (1) oder ein mit Paletten bestückter Rollsteig, wobei die Stufen (2) bzw. Paletten zu einem durchgehenden Stufen- bzw. Palettenband (2') verbunden und mittels Antriebselementen in Transportrichtung bewegbar sind, wobei ein unterer Ein- (3) oder Ausgangsabschnitt der Einrichtung (1) mit einem oberen Aus- (4) oder Eingangsabschnitt über mindestens einen, gewölbt verlaufenden Transportabschnitt (5) verbunden ist, **dadurch gekennzeichnet, dass** der Transportabschnitt (5), über seine Länge (L) und seine Höhe (H) gesehen, durch ineinander übergehende unterschiedliche Radien (R) gebildet ist, wobei zumindest der gewölbt verlaufende Transportabschnitt (5) aus mehreren geradlinig ausgebildeten Gerüstabschnitten (7) besteht, die im Bereich ihrer einander zugewandten Enden miteinander verbunden (12) sind.

2. Einrichtung nach Anspruch 1, **dadurch gekennzeichnet, dass** der Transportabschnitt (5) mehrere Kurvenbögen gleicher oder unterschiedlicher Krümmung beinhaltet.

3. Einrichtung nach einem der Ansprüche 1 bis 2, **dadurch gekennzeichnet, dass** der gewölbt verlaufende Transportabschnitt (5) freitragend ausgebildet ist.

4. Einrichtung nach einem der Ansprüche 1 bis 2, **dadurch gekennzeichnet, dass** die Gerüstabschnitte (7) auf einem gebäudeseitig vorgesehenen, gewölbt ausgebildeten Unterbau (6) abgestützt sind.

5. Einrichtung nach Anspruch 4, **dadurch gekennzeichnet, dass** im Bereich eines jeden Gerüstabschnittes (7) mindestens ein Auflager (8) vorgesehen ist, über welches der jeweilige Gerüstabschnitt (7) gegenüber dem Unterbau (6) einstellbar positioniert ist.

6. Einrichtung nach einem der Ansprüche 1 bis 5, **dadurch gekennzeichnet, dass** gerüstabschnittsseitig und gebäudeseitig zwei einander gegenüberliegende, relativ zueinander verstellbare Konsolen (14,16) vorgesehen sind, die mit Einstellmitteln (20) in Wirkverbindung stehen.

7. Einrichtung nach Anspruch 6, **dadurch gekennzeichnet, dass** im Bereich eines jeden Gerüstabschnittes (7) mindestens ein Querträger (19) positioniert ist, der zumindest konsolenseitig mit abgerundeten Außenkanten (19') versehen ist, und dass zumindest eine Konsole (14) mit einem gerundeten Abschnitt (16') versehen ist, der über die gerundeten Außenkanten (19') des Querträgers (19) führbar ist.

8. Einrichtung nach einem der Ansprüche 6 und 7, **dadurch gekennzeichnet, dass** das jeweilige Einstellmittel (20) durch eine Einstellschraube gebildet ist, die innerhalb einer in dem Querträger (19) positionierten Gewindebuchse (21) verstellbar ist.

9. Einrichtung nach Anspruch 8, **dadurch gekennzeichnet, dass** die Einstellschraube (20) in ihrem, dem gebäudeseitigen Unterbau (6) zugewandten Endbereich mit einem Gleitkörper (22) versehen ist, der sich auf dem gebäudeseitigen Unterbau (6) abstützt.

10. Einrichtung nach einem der Ansprüche 6 bis 9, **dadurch gekennzeichnet, dass** in mindestens einer der Konsolen (14,16) Langlöcher (17,18) vorgesehen sind, in welche Führungselemente (15) der nicht verstellbaren Konsole (16,14) einbringbar und dort festlegbar sind.

11. Einrichtung nach einem der Ansprüche 1 bis 10, **dadurch gekennzeichnet, dass** im kurvenförmig geführten Bereich der Transportstrecke die Führungsmittel für das Stufen- oder Palettenband ebenfalls kurvenförmig ausgebildet sind.

## Claims

1. A device for the passenger transport, in particular an escalator (1) provided with steps (2) or a moving walkway equipped with pallets, wherein the steps (2) or pallets are connected to each other to form a continuous step or pallet belt (2') and can be moved in the direction of transport by means of drive elements, wherein a lower entrance (3) or exit section of the device (1) is connected to an upper exit (4) or entrance section via at least one arched transport section (5), **characterized in that** the transport section (5), seen over the length (L) and height (H) thereof, is formed by different radii (R) which verge into each other, wherein at least the arched transport section (5) is composed of several linear framing sections (7) which are connected to each other (12) in the region of the facing ends thereof.

2. A device according to claim 1, **characterized in that** the transport section (5) comprises several curve arcs having the same or different curvatures.

3. A device according to one of the claims 1 through 2, **characterized in that** the arched transport section (5) is designed as a cantilever type.

4. A device according to one of the claims 1 through 3, **characterized in that** the framing sections (7) rest upon an arched substructure (6) provided on the side of the building.

5. A device according to claim 4, **characterized in that** at least one bearing (8) is provided in the region of each framing section (7), by means of which the respective framing section (7) can be positioned in an adjustable manner with respect to the substructure (6).

6. A device according to one of the claims 1 through 5, **characterized in that** on the side of the framing sections and on the side of the building two consoles (14, 16) are provided, which face each other and can be adjusted with respect to each other and which are actively related to setting means (20).

7. A device according to one of the claims 1 through 6, **characterized in that** at least one transverse bar (19) is positioned in the region of each framing section (7), which transverse bar is provided with rounded outer edges (19') at least on the side of the consoles, and that at least one console (14) is provided with a rounded section (16') which can be guided over the rounded outer edges (19') of the transverse bar (19).

8. A device according to one of the claims 1 through 7, **characterized in that** the respective setting means (20) is formed by a setting screw which can be adjusted within an insert nut (21) positioned in the transverse bar (19).

9. A device according to one of the claims 1 through 8, **characterized in that** the setting screw (20) is provided with a sliding body (22) in the end region thereof which faces the substructure (6) on the side of the building, which sliding body rests on the substructure (6) on the side of the building.

10. A device according to one of the claims 1 through 9, **characterized in that** oblong holes (17, 18) are provided in at least one of the consoles (14, 16), into which oblong holes guide elements (15) of the non adjustable console (16, 14) can be inserted and be fixed there.

11. A device according to one of the claims 1 through 10, **characterized in that** the guiding means of the step or pallet belt are also curve-shaped in the curve-shaped area of the transport path.

## Revendications

1. Installation de transport de personnes, notamment un escalier roulant (1) muni de marches (2) ou un trottoir roulant muni de palettes, dans lequel les marches (2) ou les palettes sont reliées les unes aux autres pour former une bande de marches ou de palettes (2') continue et sont déplaçables dans la direction de transport par moyen des éléments d'entraînement, une section d'entrée (3) ou une section de sortie inférieure de l'installation (1) étant reliée à une section de sortie (4) ou une section d'entrée supérieure via au moins une section de transport (5) qui s'étend avec une courbure, **caractérisée en ce que** la section de transport (5), vue sur sa longueur (L) et sa hauteur (H), est formée par des rayons (R) différents qui se mêlent les uns dans les autres, dans lequel au moins la section de transport (5) qui s'étend avec une courbure est composée de plusieurs sections de cadre (7) linéaires qui sont reliées les unes aux autres (12) au niveau de leurs extrémités qui se font face.

2. Installation selon la revendication 1, **caractérisée en ce que** la section de transport (5) comprend plusieurs arcs de courbe ayant des courbures identiques ou différentes.

3. Installation selon l'une des revendications 1 à 2, **caractérisée en ce que** la section de transport (5) qui s'étend avec une courbure est réalisée en porte-à-faux.

4. Installation selon l'une des revendications 1 à 3, **caractérisée en ce que** les sections de cadre (7) s'appuient sur une base (6) voûtée qui est prévue du côté du bâtiment.

5. Installation selon la revendication 4, **caractérisée en ce qu'**au moins un support (8) est prévu au niveau de chaque section de cadre (7), à l'aide duquel la section de cadre respective (7) peut être positionnée de façon réglable par rapport à la base (6).

6. Installation selon l'une des revendications 1 à 5, **caractérisée en ce que** du côté des sections de cadre et du bâtiment, deux consoles (14, 16) sont prévues qui se font face, qui peuvent être ajustées l'une par rapport à l'autre et qui sont activement reliées à des moyens de réglage (20).

7. Installation selon l'une des revendications 1 à 6, **caractérisée en ce qu'** au moins une traverse (19) est positionnée au niveau de chaque section de cadre (7), laquelle traverse est munie de bords extérieurs (19') arrondis au moins du côté des consoles, et qu'au moins une console (14) est munie d'une section arrondie (16') qui peut être guidée sur les bords extérieurs arrondis (19') de la traverse (19).

8. Installation selon l'une des revendications 1 à 7, **caractérisée en ce que** le moyen de réglage (20) respectif est formé par une vis de réglage qui est ajustable à l'intérieur d'une douille taraudée (21) positionnée dans la traverse (19).

9. Installation selon l'une des revendications 1 à 8, **caractérisée en ce que** la vis de réglage (20) est munie d'un organe coulissant (22) dans sa zone d'extrémité faisant face à la base (6) du côté du bâtiment, l'organe coulissant (22) s'appuyant sur la base (6) du côté du bâtiment.

10. Installation selon l'une des revendications 1 à 9, **caractérisée en ce que** des lumières (17, 18) sont prévues dans au moins une des consoles (14, 16) et des éléments de guidage (15) de la console (14, 16) non-réglable peuvent être insérés dans ces lumières et y être fixés.

11. Installation selon l'une des revendications 1 à 10, **caractérisée en ce que** les éléments de guidage de la bande de marches ou de palettes sont aussi courbés dans la zone de la voie de transport qui s'étend de manière curviligne.
